# EUROPEAN PATENT APPLICATION

(11) **EP 4 518 576 A1**
(43) Date of publication of application: **05.03.2025**
(21) Application number: 22940290.4
(22) Date of filing: 28.04.2022
(51) Int. Cl.: H04W 88/08

(54) **BASE STATION, REPEATER, TERMINAL, AND WIRELESS COMMUNICATION SYSTEM**

(71) Applicant: FUJITSU LIMITED, Kawasaki-shi, Kanagawa 211-8588 (JP)
(72) Inventor: HORI, Takako, Kawasaki-shi, Kanagawa 211-8588 (JP)
(74) Representative: Haseltine Lake Kempner LLP
(86) International application number: PCT/JP2022/019461
(87) International publication number: WO 2023/210018

(57) **Abstract**

An object is to provide a method for efficiently controlling a particular communication device in consideration of the properties of the particular communication device. A base station includes a transmission unit and a control unit. The transmission unit is capable of transmitting a first signal in a radio resource control (RRC) layer to the communications device. The control unit is capable of taking control to designate whether or not to transmit a second signal in the RRC layer to the communication device after the first signal, according to whether or not the communication device is of a particular type.

## Description

### FIELD

The present invention relates to a base station, a repeater, a terminal, and a wireless communication system.

### BACKGROUND

In current networks, traffic of mobile terminals (smartphones and feature phones) occupies most of network resources. In addition, the traffic used by the mobile terminals tends to increase in the future.

Furthermore, apart from the traffic used by the mobile terminals, for example, Internet of things (IoT) services (such as monitoring systems for traffic systems, smart meters, devices, and the like) is being developed. Therefore, the networks are desired to cope with services having a variety of requirements. In order to cope with such a variety of services, in communication standards for the 5th generation mobile communication (5G or New Radio (NR)) (including, for example, Non-Patent Documents 15 to 42), besides the fundamental techniques for the 4th generation mobile communication (4G) (including, for example, Non-Patent Documents 1 to 14), for example, standards have been formulated assuming support of many use cases classified into Enhanced Mobile Broadband (eMBB), Massive Machine Type Communications (MTC), and Ultra-Reliable and Low-Latency Communication (URLLC).

In the 5G communication standards, two types of radio bearers of a signaling radio bearer (SRB) and a data radio bearer (DRB) are established to perform communication. The signaling radio bearer (SRB) is a bearer mainly used to transmit and receive a signal of a radio resource control (RRC) message. In addition, there is a plurality of types of signaling radio bearers, including, for example, an SRB0 used when transmitting a radio resource control (RRC) message using a common control channel (CCCH), an SRB1 used for transmitting an RRC message using a dedicated control channel (DCCH), and the like. Note that the SRB1 is set in a terminal according to, for example, configuration information on the SRB1 included in an RRC setup message via the SRB0.

In addition, as for the data radio bearer, a plurality of data radio bearers is allowed to be set. Furthermore, a packet data convergence protocol (PDCP) entity, a radio link control (RLC) entity, and a logical channel can be set for each of the plurality of data radio bearers.

Note that the working groups of the Third Generation Partnership Project (3GPP) (registered trademark) aim to expand the coverage range. Therefore, in the working groups of the 3GPP, a network controlled (NC) repeater is mentioned as a study item of release 18 (Non-Patent Document 43).

The NC repeater has a function of relaying communication between a base station and a terminal and has a function of, for example, amplifying a signal transmitted from the base station and transmitting the amplified signal to the terminal. Note that, regarding the NC repeater, active discussion is expected in the future.

### SUMMARY

### TECHNICAL PROBLEM

When the coverage is expanded using the NC repeater, how to control the NC repeater, and the like have to be studied.

However, since the NC repeater is a matter of which discussion will be started from now, control and the like for the NC repeater have not been specified in detail, and additionally, for example, discussion on control and the like in consideration of the properties of the NC repeater has not been actually progressed. Note that this is similarly conceivable in comparable repeaters and devices other than the NC repeater.

The disclosed technique has been made in view of the above, and an object thereof is to provide a method for efficiently controlling a communication device such as an NC repeater.

### SOLUTION TO PROBLEM

In one aspect, provided is a base station including: a transmission unit capable of transmitting a first signal in a radio resource control (RRC) layer to a communication device; and a control unit that takes control to designate whether or not to transmit a second signal in the RRC layer to the communication device after the first signal, according to whether or not the communication device is of a particular type.

### ADVANTAGEOUS EFFECTS OF INVENTION

A base station, a repeater, a wireless communication system, and the like that efficiently control a device such as an NC repeater may be provided.

### BRIEF DESCRIPTION OF DRAWINGS

FIG. 1 is a diagram illustrating an exemplary network configuration according to a first embodiment.
FIG. 2 is an exemplary functional configuration diagram of a base station in a wireless communication system according to the first embodiment.
FIG. 3 is an exemplary functional configuration diagram of a repeater in the wireless communication system according to the first embodiment.
FIG. 4 is an exemplary functional configuration diagram of a terminal in the wireless communication system according to the first embodiment.
FIG. 5 is a diagram illustrating an exemplary operation flow of the base station according to the first embodiment.
FIG. 6 is a diagram illustrating an exemplary procedure for a base station and a terminal to establish an RRC connection according to a second embodiment.
FIG. 7 is a diagram illustrating an exemplary procedure for the base station and a repeater to establish an RRC connection according to the second embodiment.
FIG. 8 is a diagram illustrating an exemplary operation flow of the base station according to the second embodiment.
FIG. 9 is a diagram illustrating a first example when the method of the second embodiment is reflected in the specifications (TS38.331 (Non-Patent Document 28)).
FIG. 10 is a diagram illustrating a second example when the method of the second embodiment is reflected in the specifications (TS38.331 (Non-Patent Document 28)).
FIG. 11 is a diagram illustrating an exemplary procedure for a base station and a repeater to establish an RRC connection according to a third embodiment.
FIG. 12 is a diagram illustrating an exemplary procedure for a base station and a repeater to establish an RRC connection according to a fourth embodiment.
FIG. 13 is an exemplary hardware configuration diagram of the base station in the wireless communication system.
FIG. 14 is an exemplary hardware configuration diagram of the repeater in the wireless communication system.
FIG. 15 is an exemplary hardware configuration diagram of the terminal in the wireless communication system.

### DESCRIPTION OF EMBODIMENTS

Hereinafter, the present embodiments will be described in detail with reference to the drawings. Problems and embodiments in the present description are merely examples and do not limit the scope of rights of the present application. In particular, as long as the described expressions are technically equivalent even if they are different, such different expressions do not limit the scope of rights, and the techniques of the present application can be applied. Then, each of the embodiments can be appropriately combined within a range without causing contradiction between the processing contents.

In addition, it is also permissible if, as the used terms and the described technical contents in the present description, terms and technical contents described in specifications and contributions as standards relating to communication, such as 3GPP, are appropriately used. Such specifications are described in Non-Patent Documents 1 to 42, for example.

Hereinafter, embodiments of a base station, a repeater, a terminal, and a wireless communication system disclosed in the present application will be described in detail with reference to the drawings. Note that the following embodiments do not limit the disclosed technique.

### [Point of Difficulty]

First, before describing each embodiment, a point of difficulty in conventional techniques will be described. It should be noted that this difficulty has been newly found by the inventors as a result of thoroughly studying conventional techniques and has not been conventionally known.

As a communication technique using a repeater (may be referred as "relay device"), there is integrated access and backhaul (IAB) (for example, Non-Patent Document 24). In the IAB, in order to configure a connection of RRC between a base station and an IAB node, RRC connection establishment, a security mode command message, and RRC connection reconfiguration are performed, and for example, a system information block 1 (SIB1), a system information block 2 (SIB2), a system information block 3 (SIB3), a DRB, and the like are set. Note that the DRB is not set in some cases. Note that a system information block 0 (SIB0) is a bearer used when RRC connection establishment is performed.

In addition, as a communication technique using a repeater (i.e., relay device), there is sidelink relay (hereinafter, will be referred to as SL Relay). This is a technique in which a terminal within the coverage of the base station (hereinafter, will be referred to as a relay terminal) relays communication between the base station and a terminal outside the coverage of the base station (hereinafter, will be referred to as a remote terminal). In the SL Relay, in order to configure a connection of RRC between the base station and the relay terminal, RRC connection establishment, a security mode command message, and RRC connection reconfiguration are performed, and for example, the SIB1, SIB2, SIB3, DRB, and the like are set. After that, in order to configure a connection of RRC between the base station and the remote terminal via the relay terminal, RRC connection establishment, a security mode command message, and RRC connection reconfiguration are performed, and, for example, the SIB1, SIB2, SIB3, DRB, and the like are set between the base station and the remote terminal.

Note that the processing performed to configure the connection of RRC with the IAB node, the relay terminal, or the like described above is almost the same as the processing performed between the base station and the terminal. This allows the IAB node and the relay terminal to process, for example, an RRC message or a user plane (U-Plane) signal involving security with the base station, in which the SRB1, SRB2, DRB, and the like are configured, for example. Therefore, it can be considered that also the IAB node and the relay terminal perform RRC connection processing with the base station, similarly to the terminal. Note that the base station regards the IAB node and the relay terminal as mere terminals and does not, for example, alter the RRC connection method according to the types of terminals (such as the relay terminal, the IAB node, and the terminal within the coverage).

Meanwhile, the NC repeater is a repeater that amplifies and outputs a signal transmitted to the terminal from the base station, for example. In short, processing such as amplification only has to be desired on a signal transmitted to the terminal from the base station. In other words, for example, processing on the U-Plane signal does not have to be performed. Accordingly, for example, it is sufficient to set only some signaling radio bearers (for example, set only the SRB1), and for example, it is conceivable that the data radio bearer is not set. Note that the SRB0 is a bearer specified beforehand and is not designed to be set for each terminal by the base station.

Therefore, there is a possibility that the number of pieces of information or signals used when the RRC connection is established may be reduced as compared with, for example, the relay terminal, the IAB node, and the terminal within the coverage of the base station, which are regarded as terminals by the conventional base station.

As described above, the NC repeater can be considered to have a capacity different from that of a device regarded as a terminal, such as the IAB node or the relay terminal. In addition, it is conceivable that the NC repeater is controlled by the base station by an RRC configuration smaller than the RRC configuration set in the IAB node or the relay terminal.

Therefore, when the RRC connection is performed by simply performing processing similar to the processing in the terminals including the IAB node, the relay terminal, and the like, the number of signals involved in controlling the NC repeater and information included in the signals are similar to those for the IAB node and the relay terminal, for example. For this reason, signals and information that are likely to be decreased to control the NC repeater may not be decreased, which disables to effectively utilize network resources.

In addition, if, for example, the number of signals is decreased or the information included in the signals is reduced, how the base station identifies the NC repeater has to be stipulated. This is because, if the base station is not allowed to identify the NC repeater, the base station will perform the same processing as the processing for a normal terminal.

Moreover, how to transmit control information (such as side control information) transmitted to the NC repeater from the base station, how the NC repeater transmits a signal indicating a response to the control information to the base station, and the like also have to be studied.

Note that the above description has been made based on the NC repeater as an example, but the above difficulty is not necessarily restricted to the NC repeater. It is considered that the above difficulty can occur also in, for example, a device used in a comparable form to the NC repeater.

To summarize the above, it is considered that network resources are not allowed to be effectively utilized if the control for the RRC connection performed in the conventional repeater or terminal is adapted as it is. Therefore, regarding the RRC connection between the base station and the NC repeater, the base station has to identify the NC repeater while ensuring the characteristics of the NC repeater. As mentioned earlier, this difficulty has been newly found by the inventors as a result of thoroughly studying conventional techniques and has not been conventionally known. Hereinafter, each embodiment of the present application for solving this difficulty will be described in order.

### [First Embodiment]

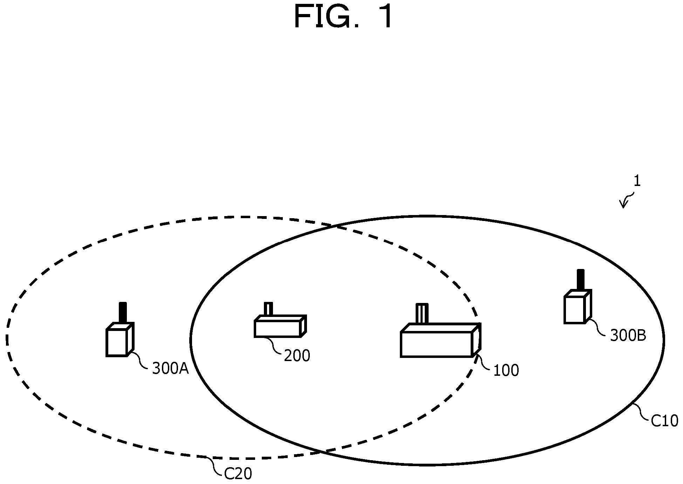

FIG. 1 illustrates a wireless communication system 1 according to a first embodiment. The wireless communication system 1 includes a base station 100, a repeater 200, and terminals 300A and 300B. Note that the base station 100 forms a cell C10. In addition, the repeater 200 forms a cell C20. The terminal 300A does not exist in the cell C10, but exists in the cell C20. In addition, the terminal 300B exists in the cell C10. Note that the terminals 300A and 300B will be simply referred to as terminals 300 in a case where the terminals 300A and 300B are not distinguished from each other. Note that the repeater 200 and the terminal 300 may be collectively referred to as communication devices.

Note that the base station 100 may be, for example, a macro wireless base station, a small wireless base station such as a pico wireless base station (including a micro wireless base station, a femto wireless base station, and the like), or a wireless base station of other various scales and may be rephrased and referred to as a wireless communication device, a communication device, a transmission device, or the like. In addition, the terminal 300 may be, for example, a mobile phone, a smartphone, a personal digital assistant (PDA), a personal computer, various kinds of devices having a wireless communication function in a vehicle or the like, or a wireless terminal of equipment (such as a sensor device) or the like and may be rephrased as a wireless communication device, a communication device, a reception device, a mobile station, or the like.

The base station 100 is coupled to a network via wired coupling with a network device (host device or another base station) (not illustrated). Note that the base station 100 may be coupled to the network device not by wire but wirelessly.

The base station 100 may be treated as separate devices by separating the wireless communication function with the terminals 300 and the digital signal processing and control functions. In this case, the device having the wireless communication function can be called a remote radio head (RRH), and the device having the digital signal processing and control functions can be called a base band unit (BBU). In addition, the RRH may be installed to project from the BBU, and an optical fiber or the like may be adopted for wired coupling between the RRH and BBU. Alternatively, coupling may be wirelessly achieved. In addition, not as in the RRH and BBU described above, the base station 100 may be separated into two of a central unit (CU) and a distributed unit (DU), for example. The DU includes at least a radio frequency (RF) radio circuit, but besides this, may be provided also with a function of a radio physical layer (or layer 1) and even with a function of a media access control (MAC) layer, as well as a function of an RLC layer.

Meanwhile, the terminals 300 communicate with the base station 100 by wireless communication. Note that the terminal 300A communicates with the base station 100 via the repeater 200. In addition, when receiving a signal transmitted from the base station 100, the repeater 200 amplifies and transmits the received signal. For example, the repeater 200 receives a signal directed to the terminal 300A by the base station 100 and amplifies the received signal to transmit the amplified signal toward the terminal 300A.

Note that, when the RRC connection is not established with the repeater 200, the base station 100 performs processing for establishing the RRC connection. In addition, when the RRC connection is not established with the terminal 300, the base station 100 performs processing for establishing the RRC connection.

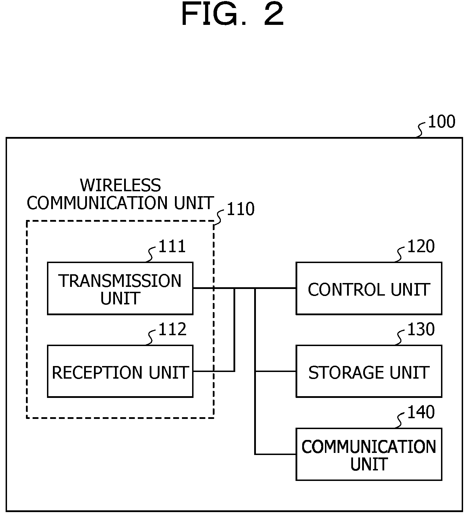

Next, the base station 100 will be described. FIG. 2 illustrates an exemplary functional configuration diagram of the base station 100. The base station 100 includes a wireless communication unit 110, a control unit 120, a storage unit 130, and a communication unit 140.

The wireless communication unit 110 is constituted by a transmission unit 111 and a reception unit 112 and performs wireless communication with the terminal 300. Specifically, for example, the transmission unit 111 transmits, to the terminal 300, downlink signals such as a signal of a random access procedure, a signal in an RRC layer, a downlink data signal, and a downlink control signal. In addition, for example, the transmission unit 111 transmits, to the repeater 200, downlink signals such as a signal of the random access procedure or a signal in the RRC layer.

Furthermore, the reception unit 112 can receive, for example, uplink signals transmitted from the terminal 300, such as a signal of the random access procedure, a signal in the RRC layer, an uplink data signal, and an uplink control signal. Note that the reception unit 112 sometimes receives various kinds of amplified signals after various kinds of signals transmitted from the terminal 300 are amplified by the repeater. In addition, the reception unit 112 can receive, for example, uplink signals transmitted from the repeater 200, such as a signal of the random access procedure, a signal in the RRC layer, and an uplink control signal.

The control unit 120 controls the base station 100. Specifically, the control unit 120 can control establishment of the RRC connection with the repeater 200, establishment of the RRC connection with the terminal 300, signal processing for a signal received by the reception unit 112, creation of a transport block (TB), mapping of the transport block to a wireless resource, and the like.

The storage unit 130 is capable of storing downlink data signals, for example.

The communication unit 140 is coupled to a network device (such as a host device or another base station device) by wire or wirelessly to perform communication. The data signals directed to the terminal 300 that have been received by the communication unit 140 can be stored in the storage unit 130.

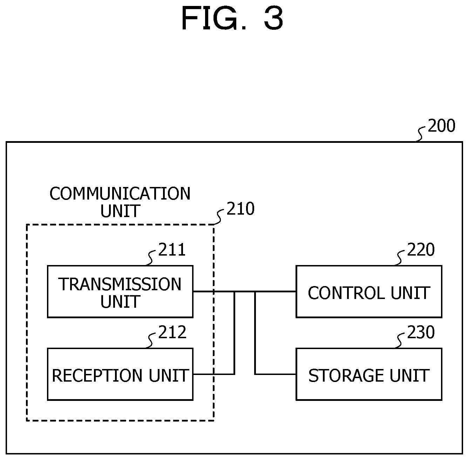

Next, the repeater 200 will be described. FIG. 3 is an exemplary functional configuration diagram of the repeater 200 in the wireless communication system according to the first embodiment. As illustrated in FIG. 3, the repeater 200 includes a communication unit 210, a control unit 220, and a storage unit 230. Each of those components is coupled in such a manner that signals and data can be input and output unidirectionally or bidirectionally. Note that the communication unit 210 can be described separately as a transmission unit 211 and a reception unit 212.

The transmission unit 211 transmits, for example, uplink signals such as a signal in the RRC layer and an uplink control signal to the base station via an antenna. In addition, for example, when receiving a signal directed to the base station 100 that has been transmitted from the terminal 300, the transmission unit 211 amplifies and transmits the received signal. In addition, for example, when receiving a signal directed to the terminal 300 that has been transmitted from the base station 100, the transmission unit 211 amplifies and transmits the received signal.

The reception unit 212 receives, for example, downlink signals such as a signal in the RRC layer or a downlink control signal transmitted from the base station 100. In addition, for example, when receiving a signal directed to the base station 100 that has been transmitted from the terminal 300, the reception unit 212 sends the received signal to the transmission unit 211. Furthermore, for example, when receiving a signal directed to the terminal 300 that has been transmitted from the base station 100, the reception unit 212 sends the received signal to the transmission unit 211.

The control unit 220 controls the repeater 200. Specifically, the control unit 220 can control establishment of the RRC connection with the base station 100, signal processing for a signal received by the reception unit 212, creation of a transport block (TB), mapping of the transport block to a wireless resource, and the like.

The storage unit 230 is capable of storing, for example, RRC configuration information (or setting information) relating to wireless communication that has been transmitted from the base station 100.

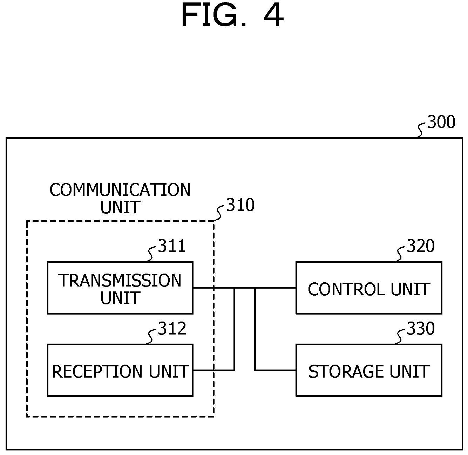

Next, the terminal 300 will be described. FIG. 4 is an exemplary functional configuration diagram of the terminal 300 in the wireless communication system according to the first embodiment. As illustrated in FIG. 4, the terminal 300 includes a communication unit 310, a control unit 320, and a storage unit 330. Each of those components is coupled in such a manner that signals and data can be input and output unidirectionally or bidirectionally. Note that the communication unit 310 can be described separately as a transmission unit 311 and a reception unit 312.

The transmission unit 311 transmits a data signal and a control signal via an antenna by wireless communication. Note that the antenna may be common for transmission and reception. The transmission unit 311 transmits, for example, uplink signals such as a signal of the random access procedure, a signal in the RRC layer, an uplink data signal, and an uplink control signal.

The reception unit 312 receives, for example, downlink signals transmitted from the base station 100, such as a signal of the random access procedure, a downlink data signal, and a downlink control signal. In addition, the signals to be received may include, for example, a reference signal to be used for channel estimation and demodulation. Furthermore, the reception unit 312 sometimes receives various kinds of amplified signals after various kinds of signals transmitted from the base station 100 are amplified by the repeater.

The control unit 320 controls the terminal 300. Specifically, the control unit 320 can control establishment of the RRC connection with the base station 100, signal processing for a signal received by the reception unit 312, creation of a transport block (TB), mapping of the transport block to a wireless resource, and the like.

The storage unit 330 is capable of storing uplink data signals, for example. In addition, the storage unit 330 is capable of storing configuration information (or setting information) relating to wireless communication that has been transmitted from the base station 100.

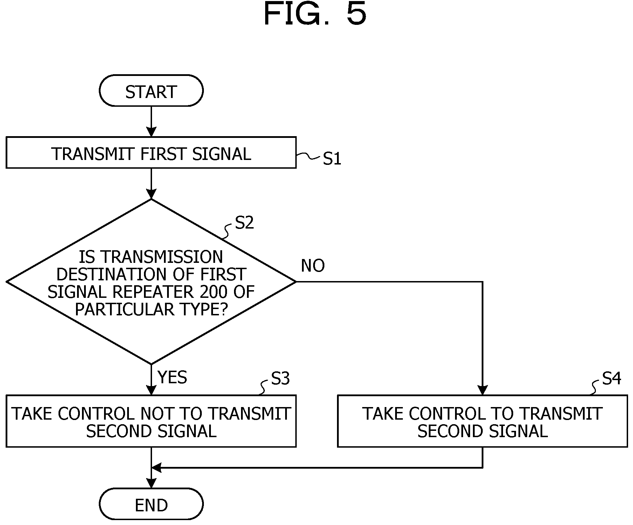

Next, processing according to the types of the repeater 200 in the base station 100 will be described with reference to FIG. 5. FIG. 5 is a diagram illustrating an exemplary operation flow of the base station 100.

The transmission unit 111 of the base station 100 transmits a first signal in the RRC layer (step S1). Thereafter, the control unit 120 of the base station 100 verifies whether or not the transmission destination of the first signal is a repeater of a particular type (step S2). Note that the repeater of the particular type may be referred to as a communication device of a particular type. In addition, the repeater (communication device) of the particular type is, for example, the NC repeater. Furthermore, a repeater that does not fall within the repeater (communication device) of the particular type is an example of a communication device of a first type. Furthermore, the repeater (communication device) of the particular type is an example of a communication device of a second type.

When verifying that the transmission destination of the first signal is a repeater (communication device) of the particular type (Yes in step S2), the control unit 120 of the base station 100 takes control not to transmit the second signal (step S3).

In addition, when verifying that the transmission destination of the first signal is not a repeater (communication device) of the particular type (No in step S2), the control unit 120 of the base station 100 takes control to transmit the second signal in the RRC layer (step S4).

Note that notification on whether or not the transmission destination is a repeater (communication device) of the particular type can be made by, for example, including information indicating that the transmission destination is a repeater (communication device) of the particular type in a response signal to the first signal and transmitting the response signal. In addition, whether or not the transmission destination is a repeater (communication device) of the particular type may be transmitted to the base station 100 from the repeater (communication device) of the particular type, for example, before the repeater (communication device) of the particular type receives the first signal from the base station 100. For example, by using a particular preamble for a preamble to be transmitted at the time of random access, notification is made of information indicating that the repeater (communication device) is of the particular type. In addition, in order to request the base station 100 to transmit the first signal, information indicating that the repeater (communication device) is of the particular type is included in a third signal to be sent to the base station 100 and transmitted. In a case where information indicating that the repeater (communication device) is of the particular type is included in the third signal, for example, an establishment cause parameter may be used. For example, one of spare bits of the establishment cause parameter described in Non-Patent Document 28 may be newly used as a bit indicating that the access is from a repeater (communication device) of the particular type. Specifically, one bit is put at a particular position in the bitmap of the establishment cause parameter to indicate that the repeater (communication device) is of the particular type. In addition, in a case where information indicating that the repeater (communication device) is of the particular type is included in the third signal, for example, notification may be implicitly made using high-order N bits (N denotes an integer) of an identifier used in the repeater (communication device) of the particular type, as a fixed value. Note that examples of the identifier include the System Architecture Evolution (SAE) Temporary Mobile Subscriber Identity (S-TMSI). For example, in the case of 5G, notification can be implicitly made by fixing and using the high-order 39 bits among the 48 bits of the 5G-S-TMSI. In short, the base station may be enabled to identify whether or not the transmission destination is a repeater (communication device) of the particular type, with the high-order 39 bits of the 5G-S-TMSI of the repeater 200. In this case, the high-order 39 bits have, for example, values predefined in the specifications. Note that notification on the remaining nine bits only has to be made using, for example, the Media Access Control Control Element (MAC CE), Uplink Control Information (UCI), or the like. In addition, the uplink control information is transmitted on the physical uplink control channel (PUCCH). Note that the information indicating that the repeater (communication device) is of the particular type is an example of class information.

Note that, when recognizing that the transmission destination is a repeater (communication device) of the particular type, the base station 100 can transmit information for controlling the repeater 200, using the MAC CE used in a downlink or the Downlink Control Information (DCI). Note that, in a case of using the downlink MAC CE, for example, the Logical Channel Identify (LCID) of the MAC subheader is used to indicate that information for controlling the repeater 200 in the repeater 200 is included in the MAC CE, and information to be transmitted to the repeater 200 that is a repeater (communication device) of the particular type is included in and transmitted on the MAC CE corresponding to the MAC subheader. Note that, in Non-Patent Document 25, the LCID of the downlink MAC subheader has a plurality of reserved fields. Therefore, any of the plurality of reserved fields can be used to indicate, with the LCID, that the MAC CE includes information for controlling the repeater 200. In addition, the downlink control information is transmitted on the physical downlink control channel (PDCCH).

Furthermore, the repeater 200 may transmit information regarding the repeater 200 with the MAC CE used in an uplink. The information regarding the repeater 200 may be, for example, in the whole or a part of the 5G-S-TMSI. In addition, the information regarding the repeater 200 included in the MAC CE used in an uplink may be included in, for example, the remaining bits of the 5G-S-TMSI excluding the fixed high-order bits. Furthermore, at least either the high-order N bits or low-order M bits (M bits) of the 5G-S-TMSI may be fixed, and the number of bits for use in notification by the MAC CE may be adjusted into a multiple of eight bits. In this manner, notification can be made with L octets (L: an integer) in the MAC CE. Note that one octet has eight bits. In addition, also for the MAC CE used in an uplink, it can be indicated by the Logical Channel Identify (LCID) of the MAC subheader that the MAC CE includes the information regarding the repeater 200. Furthermore, the MAC CE used in an uplink may include information indicating that the repeater (communication device) is of the particular type, as the information regarding the repeater 200, or information indicating that the repeater (communication device) is of the particular type may be included in the uplink control information and transmitted to notify the base station 100. In that case, the repeater 200 only has to transmit the MAC CE or the uplink control information before the base station 100 verifies whether or not the repeater (communication device) is of the particular type. In addition, the information regarding the repeater 200 may be, for example, in the remaining bits of the 5G-S-TMSI.

Furthermore, the repeater 200 and the terminal 300 may be collectively referred to as communication devices. This is because the base station 100 sometimes collectively regards the repeater 200 and the terminal 300 as terminals, and thus, the repeater 200 and the terminal 300 are sometimes described collectively. Note that, even in that case, the operation in FIG. 5 can be performed depending on whether or not the communication device is a particular communication device. For example, in a case of the terminal 300, No is selected in step S2 in FIG. 5.

As described above, in the first embodiment, after the base station 100 transmits the first signal, whether or not to transmit the second signal is controlled according to whether or not the transmission destination of the first signal is a repeater (communication device) of the particular type. By controlling in this manner, signal transmission may be suppressed in a case where the transmission destination is a repeater (communication device) of the particular type, and network resources may be effectively used.

### [Second Embodiment]

In the first embodiment, an example has been described in which whether or not to transmit the second signal is controlled according to whether or not the transmission destination of the first signal transmitted by the base station 100 is a repeater (communication device) of the particular type. In a second embodiment, an example of processing for establishing an RRC connection will be described. Note that, in the second embodiment, a wireless communication system, a base station, a repeater, and a terminal are similar to those in the first embodiment, and thus, description thereof will be omitted.

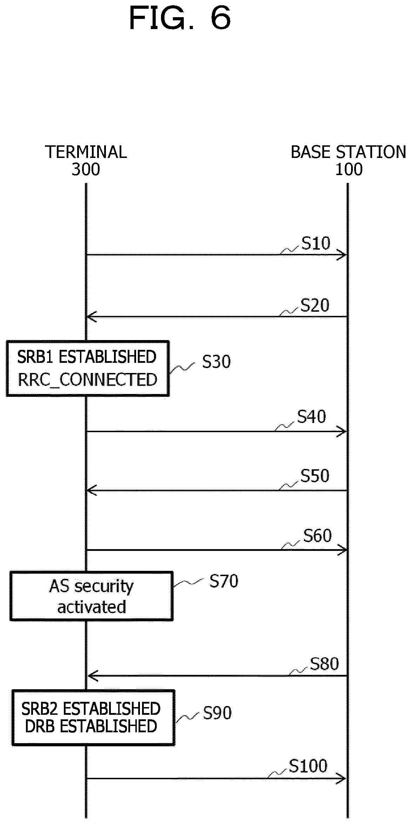

Processing until a base station 100 and a terminal 300 establish the RRC connection will be described with reference to FIG. 6. Note that the base station 100 and the terminal 300 receive the signal amplified by a repeater 200 in some cases. FIG. 6 is a diagram illustrating an exemplary procedure in which the base station 100 and the terminal 300 establish the RRC connection. Note that the terminal 300 in FIG. 6 only has to be a device regarded as a terminal and may be, for example, a relay terminal or an IAB node. In short, the terminal 300 in FIG. 6 is adapted to a communication device except a repeater of the particular type.

A transmission unit 311 of the terminal 300 transmits, to the base station 100, an RRC setup request message that is a signal in the RRC layer (step S10). Note that the RRC setup request message is transmitted via, for example, the SRB0.

After receiving the RRC setup request message with a reception unit 112, a transmission unit 111 of the base station 100 transmits, to the terminal 300, an RRC setup message that is a signal in the RRC layer (step S20). Note that the RRC setup message includes, for example, information for establishing the SRB1. In addition, the RRC setup message is transmitted via, for example, the SRB0. Furthermore, the RRC setup message is an example of the first signal.

When receiving the RRC setup message with a reception unit 312, a control unit 320 of the terminal 300 establishes the SRB1, according to the information for establishing the SRB1, and causes the state of the RRC to transition to a CONNECTED state from an IDLE state (step S30).

After step S30, the transmission unit 311 of the terminal 300 transmits an RRC setup complete message that is a signal in the RRC layer (step S40). Note that the RRC setup complete message is transmitted via, for example, the SRB1.

After step S40, the transmission unit 111 of the base station 100 transmits, to the terminal 300, a security mode command message (security mode command) that is a signal in the RRC layer (step S50). Note that the security mode command message includes, for example, a security algorithm. Note that the security mode command message is transmitted via, for example, the SRB1. In addition, the security mode command message is an example of the second signal.

After step S50, the transmission unit 311 of the terminal 300 transmits a security mode complete message (security mode complete) that is a signal in the RRC layer (step S60), and the control unit 320 of the terminal 300 makes the access stratum (AS) security activated (step S70). Note that the order of steps S60 and S70 may be reversed or may be carried out at the same timing. Note that the security mode complete message is transmitted via, for example, the SRB1.

Note that, although not illustrated, a process for the terminal to notify the base station of the user equipment (UE) capability (UE capability) may be executed after the transmission unit 311 of the terminal 300 transmits the security mode complete message.

After the AS security is activated in the terminal 300, the transmission unit 111 of the base station 100 transmits, to the terminal 300, an RRC reconfiguration message (RRC reconfiguration) that is a signal in the RRC layer (step S80). Note that the RRC reconfiguration message includes, for example, configuration information on the signaling radio bearer (SRB2), setting information on a cell group (configuration information on the RLC layer, the MAC layer, a physical Y layer, and the like), measurement configuration information, configuration information on the data radio bearer, and the like.

The control unit 320 of the terminal 300 establishes the SRB2 and the DRB according to the signal received in step S80 (step S90). Then, the transmission unit 311 of the terminal 300 transmits an RRC reconfiguration complete message (RRC reconfiguration complete) to the base station (step S100). In this manner, by performing processing between the base station 100 and the terminal 300, the RRC connection between the base station 100 and the terminal 300 is established, and for example, U-Plane data is allowed to be transmitted and received via the DRB.

Note that the signal or message transmitted between step S10 and step S100 in FIG. 6 may be simply referred to as a signal in the RRC layer or a message in the RRC layer.

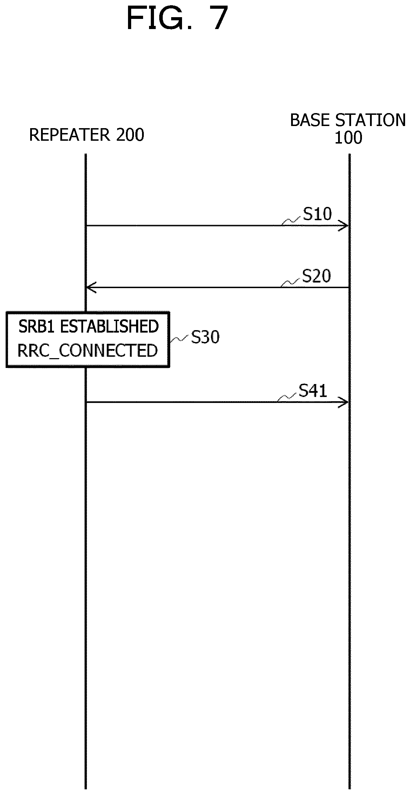

Next, processing until the base station 100 and the repeater 200 establish the RRC connection will be described with reference to FIG. 7. Note that the same contents as those in FIG. 6 are given the same reference signs. However, the information contained in the signal is sometimes likely to change if applicable. Note that FIG. 7 is a diagram illustrating an exemplary procedure in which the base station 100 and the repeater 200 establish the RRC connection. Note that FIG. 7 depicts processing when the repeater 200 is a repeater (communication device) of the particular type.

A transmission unit 211 of the repeater 200 transmits, to the base station 100, an RRC setup request message that is a signal in the RRC layer (step S10). Note that the RRC setup request message is transmitted via, for example, the SRB0.

After receiving the RRC setup request message with the reception unit 112, the transmission unit 111 of the base station 100 transmits, to the repeater 200, an RRC setup message that is a signal in the RRC layer (step S20). Note that the RRC setup message includes, for example, information for establishing the SRB1. In addition, the RRC setup message is transmitted via, for example, the SRB0. Furthermore, the RRC setup message is an example of the first signal.

When receiving the RRC setup message with a reception unit 212, a control unit 220 of the repeater 200 establishes the SRB1, according to the information for establishing the SRB1, and causes the state of the RRC to transition to the CONNECTED state from the IDLE state (step S30). Note that it has been described that the state of the RRC transitions to the CONNECTED state from the IDLE state, where this means a state in which a Cell Radio Network Temporary Identifier (C-RNTI) is allowed to be acquired. Accordingly, transition of the state of the RRC from the IDLE state to the CONNECTED state can be rephrased as transition from a state in which the C-RNTI is not allowed to be acquired to a state in which the C-RNTI is allowed to be acquired or the C-RNTI has been acquired. In addition, transition of the state of the RRC from the IDLE state to the CONNECTED state may be described as transition from a first state to a second state. Furthermore, in step S30, the repeater 200 may hold the IDLE state without causing the state of the RRC to transition to the CONNECTED state from the IDLE state.

After step S30, the transmission unit 211 of the repeater 200 transmits an RRC setup complete message that is a signal in the RRC layer (step S41). Note that the RRC setup complete message includes information indicating that the repeater is in action. In other words, the RRC setup complete message includes information indicating that the type is the particular type (such as the NC repeater). Note that the RRC setup complete message is transmitted via, for example, the SRB1. In addition, a non-access stratum (NAS) message may be piggy-backed on the RRC setup complete message. Then, the repeater 200 may be identified or approved in an upper network (core network), using the piggy-backed NAS message. In addition, the piggy-backed NAS message may have information indicating that the repeater (communication device) is of the particular type. Note that the information indicating that the repeater (communication device) is of the particular type is an example of class information.

In addition, whether or not the type is the particular type (such as the NC repeater) may be indicated by a bearer used when the RRC setup complete message is transmitted. For example, the RRC setup complete message when transmitted by the SRB0 may indicate that the type is the particular type (such as the NC repeater), and the RRC setup complete message when transmitted by the SRB1 may indicate that the type is not the particular type (such as the NC repeater).

The base station 100 receives the RRC setup complete message, recognizes that the repeater 200 is of the particular type in a case where the information indicating the NC repeater is included, and does not transmit the security mode command message transmitted in FIG. 6. Note that the security mode command message is an example of the second signal.

By processing in this manner, the base station 100 can recognize that the repeater 200 is a repeater (communication device) of the particular type and thus, may decrease the number of signals up to setting or resetting of the RRC connection between the base station 100 and the repeater 200 that is a repeater (communication device) of the particular type.

Note that the reason why the security mode command message and the subsequent messages do not have to be transmitted to the repeater 200 that is a repeater (communication device) of the particular type (hereinafter, will be referred to as the repeater 200) will be described. In a case where the repeater 200 is a repeater (communication device) of the particular type, it is considered that U-Plane data is not to be transmitted to the repeater 200 from the base station 100 or the terminal 300. Therefore, if there is an SRB (such as the SRB1) that is a bearer for exchanging control plane (C-Plane) signals, the base station 100 can recognize the repeater 200. In addition, the signal for controlling the repeater 200 from the base station 100 can be transmitted by using, for example, the MAC CE that does not involve security processing. Furthermore, a signal to be transmitted to the base station 100 from the repeater 200 can also be transmitted by using, for example, the MAC CE. In this manner, since the C-Plane and U-Plane signals involving security processing do not have to be processed, processing for the security mode command message and subsequent processing are allowed not to be done.

Note that the signal or message transmitted between step S10 and step S41 in FIG. 7 may be simply referred to as a signal in the RRC layer or a message in the RRC layer.

In addition, information to be transmitted to the repeater 200 that is a repeater (communication device) of the particular type on a signal in the RRC layer may be predefined in specifications. By defining in this manner, for example, the RRC configuration information and the like transmitted after the security message no longer have to be transmitted, and thus, wireless resources may be saved.

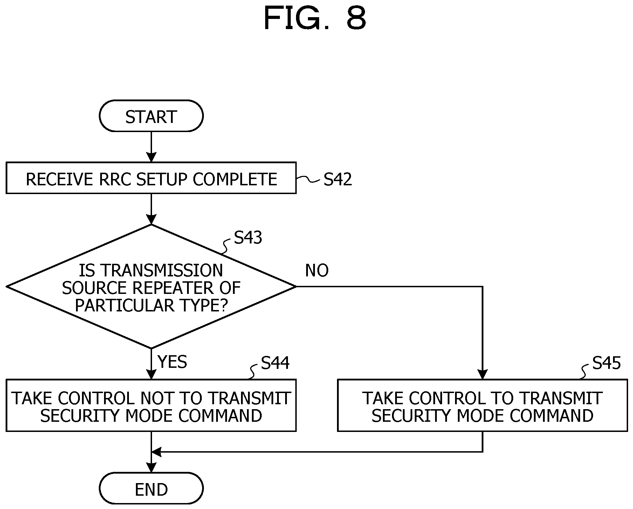

FIG. 8 illustrates processing until the base station 100 identifies the type of the repeater 200. Note that, in a case where the repeater (communication device) is not of the particular type, for example, the processing in step S40 and subsequent processing illustrated in FIG. 6 are performed.

When receiving the RRC setup complete message (S42), the base station 100 verifies whether or not the transmission source is a repeater (communication device) of the particular type (S43). Note that step S43 may be rephrased as verifying whether or not the transmission destination of the RRC setup message is a repeater (communication device) of the particular type. Note that the reception of the RRC setup complete message corresponds to, for example, step S40 in FIG. 6 or step S41 in FIG. 7.

When verifying that the transmission source of the RRC setup complete message is a repeater (communication device) of the particular type (Yes in step S43), the base station 100 takes control not to transmit the security mode command message (step S44).

In addition, when verifying that the transmission source of the RRC setup complete message is not the repeater (communication device) of the particular type (No in step S43), the base station 100 takes control to transmit the security mode command message (step S45). Note that step S45 corresponds to step S50 in FIG. 6.

By processing as described above, the base station 100 may control transmission of the security mode command message according to the fact that the repeater (communication device) is of the particular type. Note that the base station 100 sometimes operates by regarding both of the terminal 300 and the repeater 200 as terminals. In that case, in step S43, the base station 100 verifies whether or not the terminal is of the particular type (the repeater 200 of the particular type) and performs the processing in step S44 or step S45 according to the result of the verification, thereby being able to use the processing in FIG. 8 as it is. Therefore, the repeater (communication device) of the particular type can also be referred to as a communication device of the particular type.

Note that the methods described in the first embodiment may be used, within a range without contradiction, as a method for verifying whether or not the transmission source is a repeater (communication device) of the particular type and a method for the repeater 200 to notify the base station 100 of information indicating that the transmission source is a repeater (communication device) of the particular type. That is, in the random access procedure performed before step S10, the repeater 200 may notify the base station 100 of information indicating that the repeater (communication device) is of the particular type, by transmitting to a particular preamble to the base station 100. In addition, in step S10, notification may be made by including, in the RRC setup request message, information indicating that the repeater (communication device) is of the particular type. In a case where information indicating that the repeater (communication device) is of the particular type is included in the RRC setup request message, the establishment cause parameter may be used, or high-order N bits of the 5G-S-TMSI may be used. Note that the methods described in the first embodiment can be used in a case where the establishment cause parameter is used and in a case where the high-order N bits of the 5G-S-TMSI are used.

In addition, for the control information (side control information) transmitted to the repeater 200 from the base station 100, the method described in the first embodiment can be used.

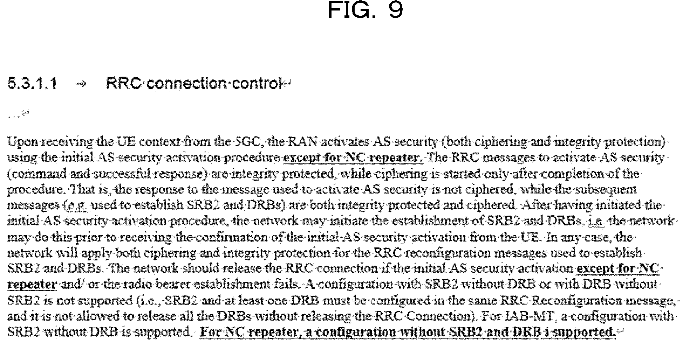

FIG. 9 illustrates a first example when the method of the second embodiment is reflected in the specifications (TS38.331 (Non-Patent Document 28)). As described in FIG. 9, definition in the specifications is allowed by including the description of the NC repeater in 5.3.1.1 RRC connection control. Note that, here, the NC repeater is an example of the repeater (communication device) of the particular type.

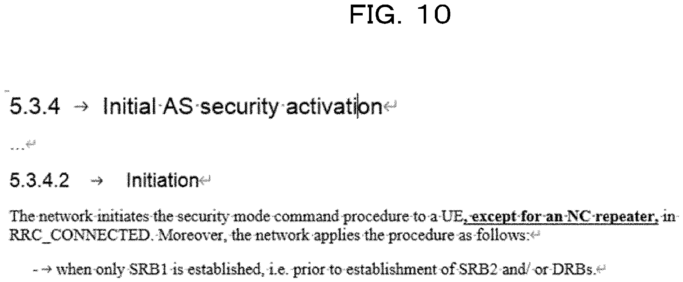

In addition, FIG. 10 illustrates a second example when the method of the second embodiment is reflected in the specifications (TS38.331 (Non-Patent Document 28)). As described in FIG. 10, definition in the specifications is allowed by including the description of the NC repeater in 5.3.4.2 Initial AS security activation.

Note that the second embodiment may be appropriately combined with the first embodiment within a range in which no contradiction with the contents of the first embodiment arises. For example, the method described in the first embodiment may be used as a method for verifying whether or not the transmission source is a repeater (communication device) of the particular type.

Furthermore, the repeater 200 and the terminal 300 may be collectively referred to as communication devices. This is because the base station 100 sometimes collectively regards the repeater 200 and the terminal 300 as terminals, and thus, the repeater 200 and the terminal 300 are sometimes collectively referred to as communication devices. Note that, even in that case, the operation in FIG. 8 can be performed depending on whether or not the communication device is a particular communication device. For example, in a case of the terminal 300, No is selected in step S43 in FIG. 8.

As described above, in the second embodiment, after transmitting the RRC setup message, the base station 100 controls whether or not to transmit the security mode command message, according to whether or not the transmission source of the RRC setup complete message is a repeater (communication device) of the particular type. Put in different terms, after the RRC setup complete message is received, whether or not to transmit the security mode command message is controlled according to whether or not the transmission source of the RRC setup complete message is a repeater (communication device) of the particular type. By controlling in this manner, the number of signals to be transmitted may be suppressed when the RRC connection is established with a repeater (communication device) of the particular type, and network resources may be effectively used.

Specifically, while the number of signals transmitted in FIG. 6 is seven, the number of signals transmitted in FIG. 7, which is processing by the repeater (communication device) of the particular type, is three. Therefore, it can be seen that the number of signals to be transmitted is suppressed when the base station 100 establishes the RRC connection with the repeater (communication device) of the particular type.

### [Third Embodiment]

In the first embodiment, an example has been described in which whether or not to transmit the second signal is controlled according to whether or not the transmission destination of the first signal transmitted by the base station 100 is a particular type of repeater (communication device). In addition, in the second embodiment, an example has been described in which, when the RRC connection is constructed, after the RRC setup request message has been transmitted, the base station 100 receives the RRC setup request complete message corresponding to the RRC setup request message and controls whether or not to transmit the security mode command message, according to whether or not the transmission source of the RRC setup request message is the particular type of repeater (communication device). In a third embodiment, an example in which the repeater 200 is controlled not to transmit the RRC setup request complete message will be described. Note that, in the third embodiment, a wireless communication system, a base station, a repeater, and a terminal are similar to those in the first and third embodiments, and thus, description thereof will be omitted.

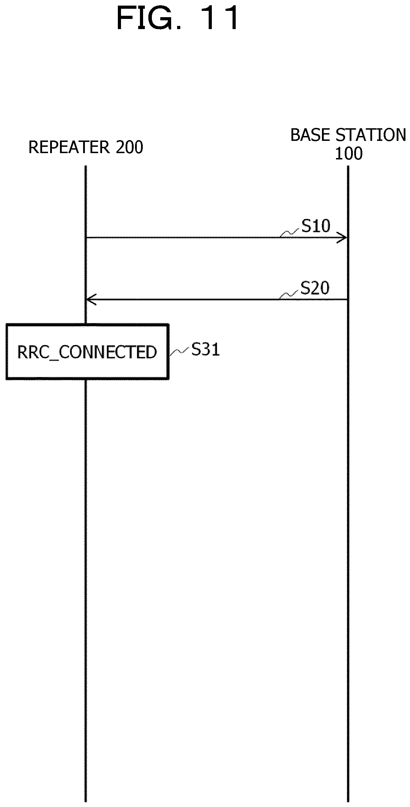

Processing until a base station 100 and a repeater 200 establish the RRC connection will be described with reference to FIG. 11. Note that the same contents as those in FIGs. 6 and 7 are given the same reference signs. However, the information contained in the signal is sometimes likely to change if applicable. Note that FIG. 11 is a diagram illustrating an exemplary procedure in which the base station 100 and the repeater 200 establish the RRC connection. Note that the repeater 200 and a terminal 300 may be collectively referred to as communication devices. FIG. 11 depicts processing when the repeater 200 is a repeater (communication device) of the particular type.

A transmission unit 211 of the repeater 200 transmits, to the base station 100, an RRC setup request message that is a signal in the RRC layer (step S10). Note that the RRC setup request message is transmitted via, for example, the SRB0.

After receiving the RRC setup request message with a reception unit 112, a transmission unit 111 of the base station 100 transmits, to the repeater 200, an RRC setup message that is a signal in the RRC layer (step S20). Note that the RRC setup message is transmitted via, for example, the SRB0. Here, in a case where the repeater 200 is verified to be a repeater (communication device) of the particular type, the base station 100 may not include the configuration information on the SRB1 in the RRC setup request message. Note that, as a method for confirming a repeater (communication apparatus) of the particular type before transmitting the RRC setup request message, for example, the repeater 200 can use and transmit a particular random access preamble among a plurality of random access preambles at the time of random access to notify the base station 100 that the repeater (communication device) is of the particular type. Alternatively, the repeater 200 may make notification, using the UCI or the uplink MAC CE.

When receiving the RRC setup message with a reception unit 212, a control unit 220 of the repeater 200 causes the state of the RRC to transition to the CONNECTED state from the IDLE state (step S31). Note that the state of the RRC has been described as transitioning to the CONNECTED state from the IDLE state, where this means a state in which the C-RNTI is allowed to be acquired or the C-RNTI has been acquired. Accordingly, transition of the state of the RRC from the IDLE state to the CONNECTED state can be rephrased as transition from a state in which the C-RNTI is not allowed to be acquired to a state in which the C-RNTI is allowed to be acquired or the C-RNTI has been acquired. Furthermore, in step S31, the repeater 200 may hold the IDLE state without causing the state of the RRC to transition to the CONNECTED state from the IDLE state.

Note that, in a case where it is unknown, at the time of transmitting the RRC setup message, whether the repeater 200 is a repeater (communication device) of the particular type, for example, a timer is started after the transmission of the RRC setup message, and it is verified whether or not a response message to the RRC setup message is received before the timer elapses a predetermined period of time. Note that, if the terminal 300 fails to receive the RRC setup message, processing such as retransmitting the RRC setup message is performed. Therefore, by inclusively considering the retransmitted RRC setup message to be a response message to the RRC setup message, it can be verified that the repeater 200 is a repeater (communication device) of the particular type, depending on whether or not the response message has been received.

In addition, after the establishment of the RRC connection, the repeater 200 may make notification that the repeater 200 is a repeater (communication device) of the particular type, using the MAC CE or the UCI. In short, after the repeater 200 transitions to a state in which the C-RNTI is allowed to be acquired or the C-RNTI has been acquired in step S31, the repeater 200 uses a signal in a layer different from the RRC layer (such as the physical layer or the MAC layer) to make notification that the repeater 200 is a repeater (communication device) of the particular type. By making notification in this manner, the base station 100 may identify that the repeater 200 is a repeater (communication device) of the particular type even without receiving the RRC setup complete message.

Note that the method described in the first embodiment may be used to verify whether or not the transmission destination of the RRC setup message is a repeater (communication device) of the particular type. That is, in step S10, notification may be made by including, in the RRC setup request message, information indicating that the repeater (communication device) is of the particular type. In a case where information indicating that the repeater (communication device) is of the particular type is included in the RRC setup request message, the establishment cause parameter may be used, or high-order N bits of the 5G-S-TMSI may be used. Note that the methods described in the first embodiment can be used in a case where the establishment cause parameter is used and in a case where the high-order N bits of the 5G-S-TMSI are used.

In addition, for the control information (side control information) transmitted to the repeater 200 from the base station 100, the method described in the first embodiment can be used.

Note that the third embodiment may be appropriately combined with the first or second embodiment within a range in which no contradiction with the contents of the first or second embodiment arises. For example, the method described in the first embodiment may be used as a method for verifying whether or not the transmission destination of the RRC setup message is a repeater (communication device) of the particular type.

Furthermore, the repeater 200 and the terminal 300 may be collectively referred to as communication devices. This is because the base station 100 sometimes collectively regards the repeater 200 and the terminal 300 as terminals, and thus, the repeater 200 and the terminal 300 are sometimes collectively referred to as communication devices.

As described above, in the third embodiment, after the base station 100 transmits the RRC setup message, the repeater 200 does not transmit the RRC setup complete message in a case where the repeater is a repeater (communication device) of the particular type. By controlling in this manner, the base station 100 does not receive the RRC setup complete message and thus, for example, does not transmit and receive the signals in step S40 and the subsequent steps in FIG. 6. In other words, after transmitting the RRC setup message, the base station 100 will take control not to transmit the security mode command message. By controlling in this manner, the number of signals to be transmitted may be suppressed when the RRC connection is established with a repeater (communication device) of the particular type, and network resources may be effectively used.

### [Fourth Embodiment]

In the first embodiment, an example has been described in which whether or not to transmit the second signal is controlled according to whether or not the transmission destination of the first signal transmitted by the base station 100 is a particular type of repeater (communication device). In addition, in the second embodiment, an example has been described in which, when the RRC connection is constructed, after the RRC setup request message has been transmitted, the base station 100 receives the RRC setup request complete message corresponding to the RRC setup request message, and controls whether or not to transmit the security mode command message, according to whether or not the transmission source of the RRC setup request message is the particular type of repeater (communication device). In a third embodiment, an example has been described in which the repeater 200 is controlled not to transmit the RRC setup request complete message. In a fourth embodiment, an example will be described in which the security mode command message is transmitted and processing up to the security setting is performed on a repeater 200. Note that, in the fourth embodiment, a wireless communication system, a base station, a repeater, and a terminal are similar to those in the first to third embodiments, and thus, description thereof will be omitted. Note that the repeater 200 and the terminal 300 may be collectively referred to as communication devices.

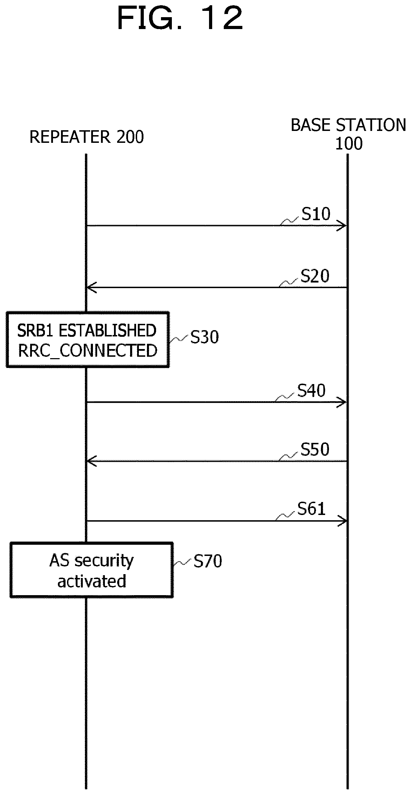

Processing until a base station 100 and the repeater 200 establish the RRC connection in the fourth embodiment will be described with reference to FIG. 12. Note that FIG. 12 is a diagram illustrating an exemplary procedure in which the base station 100 and the repeater 200 establish the RRC connection. Note that FIG. 12 depicts processing when the repeater 200 is a repeater (communication device) of the particular type.

A transmission unit 211 of the repeater 200 transmits, to the base station 100, an RRC setup request message that is a signal in the RRC layer (step S10). Note that the RRC setup request message is transmitted via, for example, the SRB0.

After receiving the RRC setup request message with the reception unit 112, the transmission unit 111 of the base station 100 transmits, to the repeater 200, an RRC setup message that is a signal in the RRC layer (step S20). Note that the RRC setup message includes, for example, information for establishing the SRB1. In addition, the RRC setup message is transmitted via, for example, the SRB0.

When receiving the RRC setup message with a reception unit 212, a control unit 220 of the repeater 200 establishes the SRB1, according to the information for establishing the SRB1, and causes the state of the RRC to transition to the CONNECTED state from the IDLE state (step S30). This means a state in which the C-RNTI is allowed to be acquired or the C-RNTI has been acquired. Accordingly, transition of the state of the RRC from the IDLE state to the CONNECTED state can be rephrased as transition from a state in which the C-RNTI is not allowed to be acquired to a state in which the C-RNTI is allowed to be acquired or the C-RNTI has been acquired.

After step S30, the transmission unit 211 of the repeater 200 transmits an RRC setup complete message that is a signal in the RRC layer (step S40). Note that the RRC setup complete message is transmitted via, for example, the SRB1. In addition, the RRC setup complete message is an example of the first signal.

After step S40, the transmission unit 111 of the base station 100 transmits, to the **terminal 300,** a security mode command message that is a signal in the RRC layer (step S50). Note that the security mode command message includes, for example, a security algorithm. Note that the security mode command message is transmitted via, for example, the SRB1.

After step S50, the transmission unit 211 of the repeater 200 transmits a security mode complete message that is a signal in the RRC layer (step S61), and the control unit 220 of the repeater 200 makes the AS security activated (step S70). Note that the order of steps S61 and S70 may be reversed or may be carried out at the same timing. Note that the security mode complete message is transmitted via, for example, the SRB1. Note that the security mode complete message may include information indicating that the repeater 200 is a repeater (communication device) of the particular type. Note that the RRC setup message and the security mode command message are examples of the first signal.

Note that, although not illustrated, a process for the repeater 200 to notify the base station 100 of the UE capability may be executed after the transmission unit 211 of the repeater 200 transmits the security mode complete message. Note that, instead of including the information indicating that the repeater 200 is a repeater (communication device) of the particular type in the security mode complete message, the information indicating that the repeater (communication device) is of the particular type may be transmitted to the base station 100 from the repeater 200, using the process of making notification of the UE capability.

In addition, the information indicating that the repeater 200 is a repeater (communication device) of the particular type may not be included in the security mode complete message, but may be included in the RRC setup complete message and transmitted, as in the second embodiment.

When recognizing that the repeater 200 is a repeater (communication device) of the particular type, a control unit 120 of the base station 100 takes control not to transmit an RRC reconfiguration message that is a signal in the RRC layer. Note that the RRC reconfiguration message is an example of the first signal.

Note that the control unit 120 of the base station 100 may take control to transmit the RRC reconfiguration message even when recognizing that the repeater 200 is a repeater (communication device) of the particular type. In that case, for example, at least one of the setting information on the SRB2 and the setting information on the DRB may not be included when transmitted. That is, when recognizing that the repeater 200 is a repeater (communication device) of the particular type, the control unit 120 of the base station 100 may control the repeater 200 not to establish the SRB2 and the DRB, or the DRB. In addition, when recognizing that the repeater 200 is a repeater (communication device) of the particular type, the control unit 120 of the base station 100 may control the repeater 200 not to make other settings, for example, settings such as addition of a Secondary Cell (SCell) or addition of a Secondary Cell Group (SCG).

Note that, in a case where the RRC reconfiguration message is transmitted from the transmission unit 111 of the base station 100, for example, the control unit 220 of the repeater 200 may take control not to transmit the RRC reconfiguration complete message.

In this manner, by reducing the messages after the security is set or reducing the information included in the messages, wireless resources may be efficiently utilized.

In addition, for the control information (side control information) transmitted to the repeater 200 from the base station 100, the method described in the first embodiment can be used.

Note that the fourth embodiment may be appropriately combined with the first to third embodiments within a range in which no contradiction with the contents of the first to third embodiments arises. For example, the methods described in the first to third embodiments may be used to verify whether or not the transmission source (or the transmission destination) is a repeater (communication device) of the particular type. For example, as described in the third embodiment, in a case where the repeater 200 does not transmit the RRC setup complete message, the base station 100 may transmit the security mode command message to the repeater 200 after a predetermined time has elapsed since the transmission of the RRC setup message. In that case, the security mode command message is transmitted via the SRB0, or the configuration information on the SRB1 is included in the RRC setup message and transmitted via the SRB according to the configuration information on the SRB1.

Furthermore, the repeater 200 and the terminal 300 may be collectively referred to as communication devices. This is because the base station 100 sometimes collectively regards the repeater 200 and the terminal 300 as terminals, and thus, the repeater 200 and the terminal 300 are sometimes collectively referred to as communication devices.

As described above, in the fourth embodiment, after the base station 100 transmits the RRC setup message, the RRC reconfiguration message is not transmitted in a case where the repeater is a repeater (communication device) of the particular type. Alternatively, after the base station 100 transmits the RRC setup message, control is taken such that particular information is not included in information included in the RRC reconfiguration message in a case where the repeater is a repeater (communication device) of the particular type. By controlling in this manner, the number of signals to be transmitted may be suppressed when the RRC connection is established with a repeater (communication device) of the particular type, and network resources may be effectively used.

### [Hardware Configuration of Each Device in Each Embodiment]

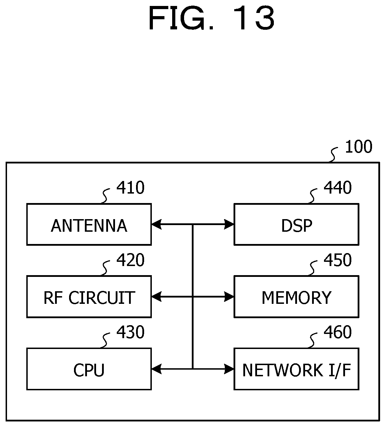

A hardware configuration of each device in the wireless communication system of each embodiment will be described with reference to FIGs. 13 to 15.

FIG. 13 is a diagram illustrating an exemplary hardware configuration of the base station 100. As illustrated in FIG. 13, the base station 100 includes, for example, a radio frequency (RF) circuit 420 including an antenna 410, a central processing unit (CPU) 430, a digital signal processor (DSP) 440, a memory 450, and a network interface (IF) 460 as hardware constituent elements. The CPU is coupled such that various kinds of signals and data signals can be input and output via a bus. The memory 450 includes, for example, at least one of a random access memory (RAM) such as a synchronous dynamic random access memory (SDRAM), a read only memory (ROM), and a flash memory and stores programs, control information, and data signals.

The correspondence between the functional configuration of the base station 100 illustrated in FIG. 2 and the hardware configuration of the base station 100 illustrated in FIG. 13 will be described. The transmission unit 111 and the reception unit 112 (or the wireless communication unit 110) are implemented by, for example, the RF circuit 420, or the antenna 410 and the RF circuit 420. The control unit 120 is implemented by, for example, the CPU 430, the DSP 440, the memory 450, a digital electronic circuit (not illustrated), or the like. Examples of the digital electronic circuit include an application specific integrated circuit (ASIC), a field-programming gate array (FPGA), a large scale integration (LSI), and the like. In addition, the storage unit 130 is implemented by, for example, the memory 450. Furthermore, the communication unit 140 is implemented by, for example, the network IF 460.

Note that a plurality of data signals to be transmitted in a plurality of sub-bands can also be generated in the base station 100, where filters for generating these data signals may be configured independently for each sub-band.

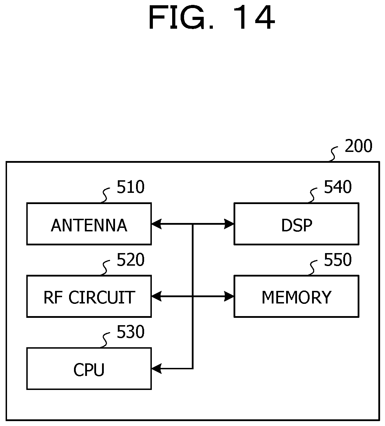

FIG. 14 is a diagram illustrating an exemplary hardware configuration of the repeater 200. As illustrated in FIG. 14, the repeater 200 includes, for example, an RF circuit 520 including an antenna 510, a CPU 530, a DSP 540, and a memory 540 as hardware constituent elements. The memory 550 includes, for example, at least one of a RAM such as an SDRAM, a ROM, and a flash memory and stores programs, control information, and data signals.

The correspondence between the functional configuration of the repeater 200 illustrated in FIG. 3 and the hardware configuration of the repeater 200 illustrated in FIG. 14 will be described. The transmission unit 211 and the reception unit 212 (or the communication unit 210) are implemented by, for example, the RF circuit 520, or the antenna 510 and the RF circuit 520. The control unit 220 is implemented by, for example, the CPU 530, the DSP 540, the memory 550, a digital electronic circuit (not illustrated), or the like. Examples of the digital electronic circuit include an ASIC, FPGA, LSI, and the like. In addition, the storage unit 230 is implemented by, for example, the memory 550.

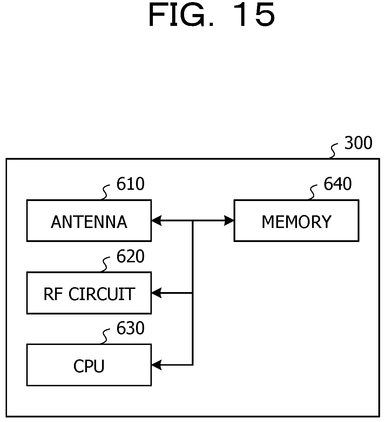

FIG. 15 is a diagram illustrating an exemplary hardware configuration of the terminal 300. As illustrated in FIG. 15, the terminal 300 includes, for example, an RF circuit 620 including an antenna 610, a CPU 630, and a memory 640 as hardware constituent elements. Moreover, the terminal 300 may include a display device coupled to the CPU 630, such as a liquid crystal display (LCD). The memory 640 includes, for example, at least one of a RAM such as an SDRAM, a ROM, and a flash memory and stores programs, control information, and data signals.

The correspondence between the functional configuration of the terminal 300 illustrated in FIG. 4 and the hardware configuration of the terminal 300 illustrated in FIG. 15 will be described. The transmission unit 311 and the reception unit 312 (or the communication unit 310) are implemented by, for example, the RF circuit 620, or the antenna 610 and the RF circuit 620. The control unit 320 is implemented by, for example, the CPU 630, the memory 640, a digital electronic circuit (not illustrated), or the like. Examples of the digital electronic circuit include an ASIC, FPGA, LSI, and the like. In addition, the storage unit 330 is implemented by, for example, the memory 640.

Note that, in each embodiment, examples of the base station, the terminal, and the repeater have been described, but the disclosed technique is not limited thereto and, for example, can be applied to diverse devices such as electronic equipment mounted on automobiles, trains, airplanes, artificial satellites, and the like, electronic equipment carried by drones and the like, robots, audio-visual (AV) equipment, home appliances, office equipment, vending machines, and other home equipment.

In addition, in each embodiment, the 5th generation mobile communication has been mentioned as an example and used for description, but the disclosed technique is not exclusively applied thereto. For example, the disclosed technique may be applied to mobile communication of different generations such as the 6th generation and the 7th generation.

### CITATION LIST

### NON-PATENT DOCUMENT

Non-Patent Document 1: 3GPP TS 36.133 V17.5.0 (2022-03)
Non-Patent Document 2: 3GPP TS 36.211 V17.1.0 (2022-03)
Non-Patent Document 3: 3GPP TS 36.212 V17.1.0 (2022-03)
Non-Patent Document 4: 3GPP TS 36.213 V17.1.0 (2022-03)
Non-Patent Document 5: 3GPP TS 36.214 V17.0.0 (2022-03)
Non-Patent Document 6: 3GPP TS 36.300 V16.7.0 (2021-12)
Non-Patent Document 7: 3GPP TS 36.321 V16.6.0 (2021-09)
Non-Patent Document 8: 3GPP TS 36.322 V16.0.0 (2020-07)
Non-Patent Document 9: 3GPP TS 36.323 V16.5.0 (2021-12)
Non-Patent Document 10: 3GPP TS 36.331 V16.7.0 (2021-12)
Non-Patent Document 11: 3GPP TS 36.413 V17.0.0 (2022-04)
Non-Patent Document 12: 3GPP TS 36.423 V17.0.0 (2022-04)
Non-Patent Document 13: 3GPP TS 36.425 V17.0.0 (2022-04)
Non-Patent Document 14: 3GPP TR 36.912 V17.0.0 (2022-03)
Non-Patent Document 15: 3GPP TS 37.324 V16.3.0 (2021-06)
Non-Patent Document 16: 3GPP TS 37.340 V16.8.0 (2022-12)
Non-Patent Document 17: 3GPP TS 38.201 V17.0.0 (2021-12)
Non-Patent Document 18: 3GPP TS 38.202 V17.1.0 (2022-03)
Non-Patent Document 19: 3GPP TS 38.211 V17.1.0 (2022-03)
Non-Patent Document 20: 3GPP TS 38.212 V17.1.0 (2022-03)
Non-Patent Document 21: 3GPP TS 38.213 V17.1.0 (2022-03)
Non-Patent Document 22: 3GPP TS 38.214 V17.1.0 (2022-03)
Non-Patent Document 23: 3GPP TS 38.215 V17.1.0 (2022-03)
Non-Patent Document 24: 3GPP TS 38.300 V16.8.0 (2021-12)
Non-Patent Document 25: 3GPP TS 38.321 V16.7.0 (2021-12)
Non-Patent Document 26: 3GPP TS 38.322 V16.2.0 (2020-12)
Non-Patent Document 27: 3GPP TS 38.323 V16.6.0 (2021-12)
Non-Patent Document 28: 3GPP TS 38.331 V16.7.0 (2021-12)
Non-Patent Document 29: 3GPP TS 38.401 V16.9.0 (2022-04)
Non-Patent Document 30: 3GPP TS 38.410 V17.0.0 (2022-04)
Non-Patent Document 31: 3GPP TS 38.413 V16.9.0 (2022-04)
Non-Patent Document 32: 3GPP TS 38.420 V17.0.0 (2022-04)
Non-Patent Document 33: 3GPP TS 38.423 V17.0.0 (2022-04)
Non-Patent Document 34: 3GPP TS 38.470 V17.0.0 (2022-04)
Non-Patent Document 35: 3GPP TS 38.473 V17.0.0 (2022-04)
Non-Patent Document 36: 3GPP TR 38.801 V14.0.0 (2017-03)
Non-Patent Document 37: 3GPP TR 38.802 V14.2.0 (2017-09)
Non-Patent Document 38: 3GPP TR 38.803 V14.3.0 (2022-03)
Non-Patent Document 39: 3GPP TR 38.804 V14.0.0 (2017-03)
Non-Patent Document 40: 3GPP TR 38.900 V15.0.0 (2018-06)
Non-Patent Document 41: 3GPP TR 38.912 V17.0.0 (2022-03)
Non-Patent Document 42: 3GPP TR 38.913 V17.0.0 (2022-03)
Non-Patent Document 43: RP-213700, 3GPP TSG RAN Meeting, #94e Electronic Meeting, Dec. 6-17, 2021

### REFERENCE SIGNS LIST

1Wireless communication system
100Base station
C10Cell
110Wireless communication unit
111Transmission unit
112Reception unit
120Control unit
130Storage unit
140Communication unit
200Repeater
C20Cell
210Communication unit
211Transmission unit
212Reception unit
220Control unit
230Storage unit
300, 300A, 300BTerminal
310Communication unit
311Transmission unit
312Reception unit
320Control unit
330Storage unit
410Antenna
420RF circuit
430CPU
440DSP
450Memory
460Network IF
510Antenna
520RF circuit
530CPU
540DSP
550Memory
610Antenna
620RF circuit
630CPU
640Memory

## Claims

1. A base station comprising:
a transmission unit capable of transmitting a first signal in a radio resource control (RRC) layer to a communication device; and
a control unit that takes control to designate whether or not to transmit a second signal in the RRC layer to the communication device after the first signal, according to whether or not the communication device is of a particular type.

2. The base station according to claim 1, wherein
the control unit takes control to transmit the second signal when determining that the communication device is of a first type, and takes control not to transmit the second signal when determining that the communication device is of a second type.

3. The base station according to claim 2, further comprising
a reception unit that receives, from the communication device, a third signal that includes class information that indicates whether or not the communication device is of the second type, wherein
the control unit controls whether or not to transmit the second signal, according to the class information.

4. The base station according to claim 3, wherein
the class information is a Media Access Control Control Element (MAC CE) included in the third signal or information included in uplink control information.

5. The base station according to claim 3, wherein
the first signal is an RRC setup message,
the second signal is a security command message, and
the third signal is an RRC setup complete message.

6. The base station according to claim 3, wherein
the control unit designates whether or not the communication device is of the particular type, according to a bearer to which the third signal is transmitted.

7. The base station according to claim 1, wherein
the first signal is an RRC setup message, and
the second signal is a security command message.

8. The base station according to claim 1, wherein
the control unit designates that the communication device is of a second type in a case where a response signal to the first signal is not received from the communication device.

9. The base station according to claim 1, wherein
the second signal is an RRC reconfiguration message.

10. A repeater in a communication device that relays communication between a base station and a terminal,
the repeater comprising:
a control unit that controls a configuration of a radio resource control (RRC) connection configured with the base station; and
a reception unit that receives a first signal in an RRC layer and a second signal in the RRC layer transmitted from the base station in a case where the base station determines that the communication device is of a first type, and receives the first signal transmitted from the base station in a case where the base station determines that the communication device is of a second type.

11. The repeater according to claim 10, wherein
the control unit takes control not to configure at least one of a signaling radio bearer (SRB) 2 or a data radio bearer (DRB) when configuring the RRC connection.

12. A terminal that receives a signal transmitted from a base station via a repeater,
the terminal comprising:
a reception unit that receives the signal transmitted by the base station from the repeater that takes control to receive a first signal in a radio resource control (RRC) layer and a second signal in the RRC layer transmitted from the base station in a case where the base station determines that the repeater is of a first type, and to receive the first signal transmitted from the base station in a case where the base station determines that the repeater is of a second type; and
a control unit that performs signal processing on the received signal.

13. A wireless communication system comprising:
a base station;
a terminal; and
a repeater configured to relay a communication between the base station and the terminal, wherein
the base station is configured to take control to determine, based on whether or not the repeater is of a particular type, whether or not to transmit a second signal in a radio resource control (RRC) layer to the communication device after transmitting a first signal in the RRCE layer to the repeater.
